Europäisches Patentamt

European Patent Office

Office européen des brevets

(19)

(11) Publication number: **0 004 143**
**B1**

(12) **EUROPEAN PATENT SPECIFICATION**

(45) Date of publication of patent specification: **27.01.82**

(21) Application number: **79300263.5**

(22) Date of filing: **21.02.79**

(51) Int. Cl.³: **B 02 C 13/04,**
**B 02 C 13/282,**
**A 01 F 29/00, B 26 D 7/06**

(54) **Roughage shredder.**

(30) Priority: **23.02.78 AU 3494/78**

(43) Date of publication of application:
**19.09.79 Bulletin 79/19**

(45) Publication of the grant of the European patent:
**27.01.82 Bulletin 82/4**

(84) Designated Contracting States:
**DE FR GB IT NL**

(56) References cited:
**DE - A - 2 046 908**
**DE - A - 2 324 996**
**DE - B - 1 221 835**
**DE - C - 823 063**
**FR - A - 944 780**
**FR - E - 79 916**
**US - A - 2 548 664**
**US - A - 3 887 141**
**US - A - 3 929 293**

(73) Proprietor: **COMMONWEALTH SCIENTIFIC AND**
**INDUSTRIAL RESEARCH ORGANIZATION**
**Limestone Avenue**
**Campbell Australian Capital Territory (AU)**

(72) Inventor: **Peck, Norman James**
**289 Seven Hills Road South**
**Seven Hills New South Wales (AU)**

(74) Representative: **Cline, Roger Ledlie et al,**
**STANLEY, POPPLEWELL, POOLE 54 New**
**Cavendish Street**
**London W1M 8HP (GB)**

Courier Press, Leamington Spa, England.

## Roughage shredder

This invention relates to shredding devices and in particular to devices for shredding fodder for ruminant animals.

The term roughage is commonly used to mean materials of high fibre content such as hay, straw, silage and seed husks. Such materials play an important part in the ruminant diet because of their ability to maintain normal rumen contraction, and to stimulate saliva secretion and volatile fatty acid production. For this ability to be exercised in full it is desirable that the fibre length be of the order of 1—5 cms. In addition to such physiological considerations practical benefits derive from short fibre length material in that the packing and transport of the roughage is improved. It is therefore usual to comminute straw and similar stalky materials to about 3 cm length either when they are to be fed directly to ruminants or before they are ensilaged.

A variety of equipment is available for producing short fibre length roughage. For example, there is the conventional chaff cutter in which, say, straw is fed across the path of revolving knife blades which coact with a fixed blade to chop the straw to the desired length. Also there is the hammer mill which is, perhaps, most likely to be used when straw is to be blended with other feedstuffs.

Conventional machinery for comminuting feed material does, however, suffer from operating limitations and provides a far from ideal product. Thus the chaff-cutter is capable of only low throughput in relation to its size and power requirement (about 5 kWh/t), moreover, the blades of the chaff-cutter have to be carefully set with respect to the fixed blade, which need frequent sharpening and are easily damaged by foreign bodies. Possibly its greatest failing is that as the stalks are only cut across the length, the inner surfaces, which are relatively unlignified compared with the outer surfaces, remain unexposed and so the material is less readily digested than it might be.

The hammer mill is even less satisfactory than the chaff cutter. It cannot economically handle material of moisture content higher than about 14%, yet when dry material is being treated there is a heat problem and frequently a dust problem also. The major factor militating against use of the hammer mill is, however, the high power requirement (about 7 kWh/t) arising from the frictional forces generated when the feed material is being crushed and ground between the closely spaced hammer tips and screen. A typical hammer mill is shown in FR—E—79916. Even in variants of the hammer mill where the screen is dispensed with, such as described in US—A—2066621, 2331597, 2822138 and 3857520, the frictional problem is not alleviated. In fact, it is aggravated, because in such devices the screen is supplanted by a variety of breaker plates which do not have perforations to relieve the frictional forces.

A device which shreds the material overcomes the disadvantages of the prior art comminuting devices by providing a machine capable of very effective reduction of a wide range of materials, whether wet or dry, to a form particularly suitable for digestion and at uniquely low power consumption. A highly efficient shredding action is afforded by rapidly rotating radially aligned blades when used in conjunction with an uneven arcuate surface. The surface is located at such a distance from the circle described by the blade tips that the material being treated is *not* crushed between the blade tips and surface, but instead it is shred by the blades, projected against the surface and repeatedly directed back into the path of the blades for further shredding during passage through the machine.

DE—B—1221835 presents to the rotor an uneven interior surface formed by a series of protuberances aligned substantially parallel to the axis of the rotor, but these protuberances are of substantially semi-cylindrical form which are not effective in terms of creating air disturbance. The protuberances are separated by extensive flat zones which would not be effective in causing the material to rebound. The angle of attack of the arcuate surfaces of the protuberances varies widely from the base to the tip of the protuberances.

These disadvantages are overcome by controlling the cross-section of the protuberance to maximise rebound of material into the path of the rotor blades, to create maximum air turbulence within the casing and to avoid lodgement of material in the trough between the ripples. According to the present invention, the protuberances have a cross-section formed of angular ripples wherein the included angle of the ripples is not less than 90° and for the majority of the ripples lies in the range of 100° to 130°.

A preferred embodiment of the invention will now be described with reference to the accompanying drawings, wherein:

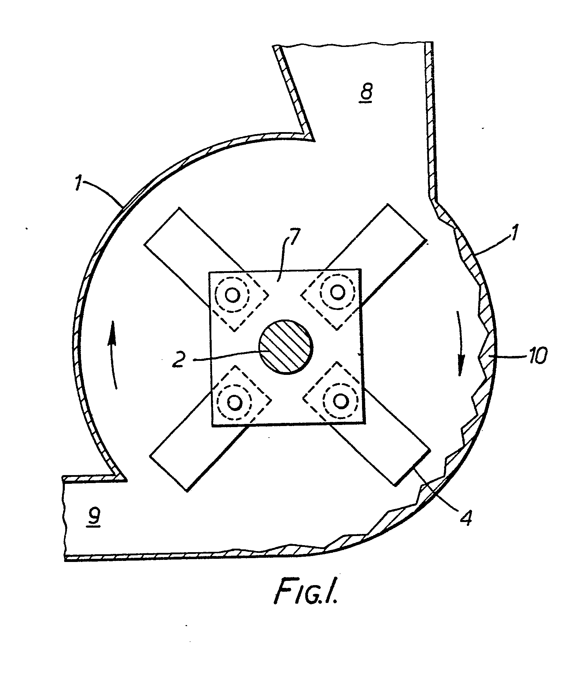

Figure 1 is a section through the machine taken at right angles to the axis of the rotor.

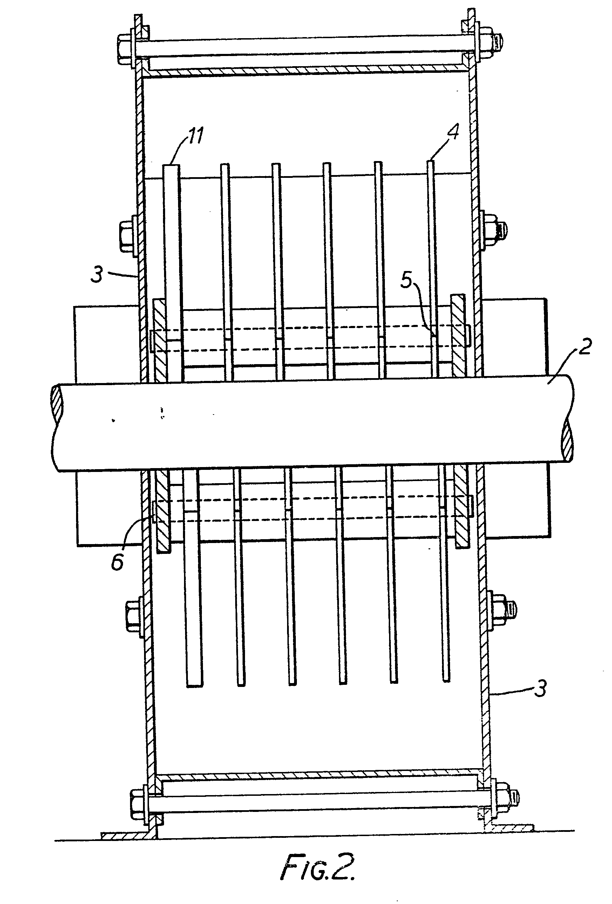

Figure 2 is a cross-section through the axis of the rotor.

In the illustrated embodiment 1 is a generally cylindrical casing within which is supported a rotor 2 journalled into the casing end-walls 3. A series of blades 4 are pivotally mounted to shafts 5 secured at their ends 6 to discs 7 fixed to the rotor. An inlet duct 8 permits the introduction of material into the path of the blades. The inlet duct may be provided with a sliding gate or similar mechanism for regulating the inflow of material. Provision of restriction means on the outlet may also prove useful, since the product tends to become finer if the passage of air through the machine is restricted. A tangentially disposed outlet duct 9 direct comminuted material to associated equipment such as conveyor belts, collecting bins, separators and the like. On the interior surface of the casing through an arc extending roughly from the inlet duct to the outlet duct there are formed a series of ripples 10.

In operation the rotor is coupled to a motor and rotated in the direction shown by the arrows. Material to be processed is fed into the inlet duct 8 to be struck by the rotating blades and flung towards the rippled interior surface of the casing 1. The mechanisms whereby material is directed back to the blades will depend on factors such as the velocity and density of the material. The heavier material will strike the surfaces of the ripples which face the direction of rotation of the rotor and rebound upon impact, whereas lighter material is caught up in the turbulent air flow generated by the ripples and returned back into the path of the blades without contacting the ripples. The effect is that the material contacts the blades many times before being discharged through outlet 9.

Although not illustrated, an alternative to the inlet duct 8 may take the form of an aperture in an end wall of the casing through which material can be introduced in a direction generally parallel to the axis of the rotor. Such an arrangement may be found to be more convenient when processing long, stiff feed material, in which case as a further refinement it may be advantageous if rotor blades such as 11 closest to the inlet aperture are of relatively heavier construction than the other blades and also cooperate with a fixed edge in the casing end wall adjacent to the inlet aperture. In embodiments where feed material is introduced via an end wall aperture it may be found convenient to have a vertically disposed rotor, instead of a horizontal rotor which would be usual where material is introduced via a duct in the cylindrical portion of the casing.

As the primary purpose of the rotor blades is to shred material they should have at least one leading edge capable of effecting a shearing action. The blades may, therefore, take the form of knives. However, as mentioned above when referring to chaff cutters, knife blades are likely to become blunted after relatively little use and are also susceptible to damage by contact with foreign bodies. We have found that knife edges are not essential, and less sharp edges such as those of blades of rectangular cross-section, permit relatively maintenance free shredding of a wide range of feed materials, and in addition the flat leading surface presented by rectangular cross-section blades plays a valuable part in projecting material towards the arcuate surface of the housing. Given sufficient rigidity and inertia, the shredding ability of rectangular cross-section blades varies little with weight and cross-sectional dimensions. However, it is possible to influence power consumption and throughput by matching blade size to the material being processed. Thus when processing, say, straw, it would be preferable to use thinner blades than when processing heavier material.

In the illustrated embodiment the blades are depicted as pivotally attached to the rotor. This is a preferred arrangement because it permits the blades to encounter foreign bodies, which might be accidentally introduced into the casing, without suffering serious damage. Otherwise there is no reason why they should not be rigidly secured to the rotor.

The profile of the arcuate surface should be of a form which ensures that material directed towards it by the rotor blades is directed back into the path of the blades. The surface comprises a series of corrugations or ripples which are generally parallel to the axis of the rotor. The re-entrant angle of the ripples should not be so acute as to allow the build-up of material therein. On the other hand, the faces presented by the ripples to material flung from the rotor blades should be angled to maximise rebound of material to the blades, and to promote air turbulence. We therefore employ ripple angles of not less than 90° with a majority in the range 100°—130° and most preferably in the range 100°—120°. Generally the ripples will extend in an arc from a point in the housing close to where material is introduced to a point close to the outlet duct. In such a case it may be advisable if ripples in sectors close to the ends of the arc, in particular those at the inlet end, are shallower than those in the mid-section to reduce the chance of material build up in the re-entrants. While it will be apparent that the number of opportunities for rebound into the path of the rotor blades will be related to the number of ripples in an arcuate surface of given length, it should also be recognised that this is not a linear relationship, since there is a minimum ripple face width (which will vary according to material being processed) for each ripple face below which the ripple ceases to present sufficient surface for most effective rebound. In other words, with ripples below a certain size, material will tend to strike the ripple tips rather than the ripple faces. With ripple angles of 100°—130° we have found that, using a rotor of about 400 cm overall diameter, ripples with face widths 1—1.5 cms allow effective processing of a great range of materials.

The present invention enjoys a relatively low power consumption compared with prior art roughage processing machinery, for example, a power requirement of about 4 kWh/t would be usual when processing straw. This is achieved by avoidance of frictional forces of the sort incurred when material is ground or sheared between opposing elements such as the hammers and screen of a hammer mill. While the machine may, if desired, be run with the blade tips in close proximity to the ripples such a mode of operation is entirely unnecessary and significantly wasteful of power. Preferably the ripples should be at a distance from the rotor tips sufficient to prevent the crushing of material between the moving and fixed elements. For instance when reducing straw to lengths of, say, 2—3 cms, a rotor tip/ripple clearance of about 6 mm should prove satisfactory. When different lengths are required, or when processing different materials, the optimum clearance may be other than 6 mm, and for this reason, it is advisable that the rotor be mounted in slidable bearings to permit variation in rotor tip/ripple clearance. An obvious alternative to such an arrangement is for the rippled section of the machine casing to be adapted for movement towards or away from the rotor.

The nature of the final product is also influenced by rotor tip speed. For example, when processing dry straw to produce 2—3 cms length chaff, a rotor tip speed of about 10,000 cm/sec appears to give the best result, but with straw of 50% moisture content a rotor tip speed of about 8,000 cm/sec proves more effective. Accordingly for flexibility of operation it is preferable for the rotor to be driven by a variable speed motor.

It has previously been mentioned that straw cut in a conventional chaff cutter is far from ideal as a ruminant feedstuff, because the stalks are only cut cross-wise and this results in a considerable portion of straw chaff in a ruminant diet passing undigested through the animals alimentary canal. By contrast the present invention operates in two ways to yield a chaff which is substantially more digestible. Firstly, the stalks are usually split open lengthways, thereby exposing the more easily digested inner surface to the action of rumen fluids, and secondly the overall surface area available for attack is increased because the stalks are not clearly cut across in the same way as with a chaff-cutter, but are roughly severed to yield edges composed of teased-out fibres and incipient longitudinal splits. For instance, when samples of material for the same batch of oaten straw was processed to about 2 cm length in a chaff-cutter, hammer mill and a shredder according to this invention, the digestibility of the product over 3 days was found to be 39.7%, 47.4% and 56.4%, respectively, as measured gravimetrically by suspending the material in fine mesh nylon bags in the rumen of live sheep.

In the preparation of roughage it is becoming increasingly common to include a treatment with agents, such as acids, alkalis, formic acid, formaldehyde, urea and molasses, which will improve digestibility or palatability, act as a preservative, or otherwise modify the material. A further refinement of this invention is, therefore, the incorporation of means for introducing modifying agents, in gaseous or liquid form, into the casing. For instance, such means might take the form of a perforated pipe located within the casing, and through which the modifying agent may be metered to the material during comminution or as it is being discharged, so that it is atomised and intimately mixed with the material by the action of the rotor blades.

Hitherto the machine of this invention has been discussed in terms of its performance as a roughage shredder, in which respect it can be shown to offer significant advantages over prior art devices. However, the machine is further distinguished by its surprising capacity to reduce an apparently limitless range of animal and vegetable materials at power consumption levels not possible with any known equipment. For instance, seeds such as soy, sunflower, safflower, rice, rape, oats and sorghum are quickly and effectively reduced to a fine meal or a gritty meal (as governed by the speed of the rotor) with substantial savings (about 40%) in power consumption compared with processing by a hammer mill; likewise leaf crops such as lucerne; moreover lengthy materials, such as corn stalks and sugar cane, can be readily processed to a product comprising fine particles in admixture with separated fibres and fibre bundles ranging from 1 cm to 10 cm in length. It is particularly notable that the high moisture content of materials such as sugar cane does not adversely affect the performance of the machine, whereas in similar circumstances, a hammer mill would quickly be brought to a standstill. The machine will also handle woody materials such as tree branches, these being reduced to a mixture of fine particles, chips and fibre bundles which may be passed through the machine one or more times again until in a form suitable for use as a paper-making pulp.

In the same way as with plant materials, animal products such as offal, bones, fish heads and the like can be fed into the machine and, irrespective of moisture content, rapidly discharged in the form of meal or substantially homogeneous slurry.

The machine may also be used for processing municipal waste (after separation of refractory materials) to render it more suitable for incineration or for composting.

## Claims

1. A shredding device of the kind comprising a rotor (2) having a plurality of blades (4) mounted thereto, said rotor being supported within a generally cylindrical housing (1) centered about the axis of the rotor (2), said cylindrical casing presenting to the rotor an uneven interior surface formed by a series of protuberances aligned substantially parallel to the axis of the rotor for at least part of its circumference extending from the region of a tangentially disposed outlet duct (9) and being spaced apart from the tips of the rotor blades (4) so that material introduced into the casing is repeatedly directed back and forth between the rotor blades (4) and the surface, said device being characterised in that the protuberances have a cross-section formed of angular ripples (10) wherein the included angle of said ripples is not less than 90° and for a majority of said ripples lies in the range 100—130°.

2. A shredding device as claimed in claim 1 wherein none of the surfaces of the ripples is tangential to a circle centered on the axis of the rotor (2).

3. A device according to claim 1 or claim 2, wherein the clearance between the arc described by the rotor blade tips (4) and said uneven interior surface is not less than 6 mm.

4. A device according to any preceding claim which incorporates means for varying the clearance between the arc described by the rotor blade tips (4) and said uneven interior surface.

5. A device according to any preceding claim wherein said rotor (2) is horizontally disposed and an inlet duct (8) opens into said cylindrical casing (1) at a point above the axis of the rotor (2) and forward of said axis with respect to its direction of rotation.

6. A device according to claim 5 wherein said uneven interior surface extends substantially from the region of the inlet duct (8) to the region of the outlet duct (9).

7. A device according to any one of claims 1 to 4 wherein an inlet duct (8) comprises an aperture in at least one end wall of said cylindrical casing (1).

8. A device according to claim 7 wherein rotor blades (4) adjacent said aperture cooperate with a knife edge mounted to the casing at the aperture to provide a chopping action.

9. A device according to any preceding claim which incorporates means for injecting fluids into said casing (1).

## Revendications

1. Dispositif de déchiquetage du type comprenant un rotor (2) ayant un ensemble de lames (4) montées sur le rotor, celui-ci étant monté dans un logement de forme générale cylindrique (1), centré autour de l'axe du rotor (2), ledit logement cylindrique présentant en regard du rotor une surface intérieure irrégulière formée par une série de protubérances alignées sensiblement parallèlement à l'axe du rotor sur au moins une partie de sa périphérie s'étendant d'une région comprenant un conduit d'évacuation (9) disposé tangentiellement audit logement et étant espacées des extrémités des lames (4) du rotor de telle sorte que la matière introduite dans le boitier soit dirigée de façon répétée en avant et en arrière entre les lames (4) du rotor et la surface dudit dispositif, celui-ci étant caractérisé en ce que les protubérances ont une section droite formée de rides angulaires (10) dans laquelle l'angle inclus desdites rides n'est pas moindre que 90° et se trouve compris pour la majorité des rides dans le domaine de 100 à 130°.

2. Dispositif tel que revendiqué en 1 dans lequel aucune des surfaces des rides n'est tangente à un cercle centré sur l'axe du rotor (2).

3. Dispositif tel que revendiqué en 1 ou 2, dans lequel le jeu compris entre l'arc décrit par les extrémités (4) des lames du rotor et ladite surface intérieure irrégulière n'est pas moindre que 6 mm.

4. Dispositif tel que revendiqué dans l'une quelconque des revendications 1 à 3 incorporant un moyen faisant varier le jeu entre l'arc décrit par les extrémités des lames (4) du rotor et ladite surface intérieure irrégulière (10).

5. Dispositif tel que revendiqué dans l'une quelconque des revendications 1 à 4 dans lequel ledit rotor (2) est disposé horizontalement, le conduit d'entrée (8) débouchant dans ledit logement cylindrique (1) en un point au-dessus de l'axe du rotor (2) et dans la direction de l'avancement des produits par rapport au sens de rotation dudit axe.

6. Dispositif tel que revendiqué en 5 dans lequel ladite surface intérieure irrégulière (10) s'étend sensiblement de la région du conduit d'entrée (8) à la région du conduit d'évacuation (9).

7. Dispositif tel que revendiqué dans l'une quelconque des revendications 1 à 4 dans lequel le conduit d'entrée (8) comporte une ouverture dans au moins une paroi terminale dudit logement cylindrique (1).

8. Dispositif tel que revendiqué en 7 dans lequel les lames (4) du rotor, adjacentes à ladite ouverture coopèrent avec le bord d'un couteau monté sur le logement à l'endroit de l'ouverture pour provoquer une opération de découpe.

9. Dispositif tel que revendiqué dans l'une quelconque des revendications 1 à 8 incorporant un moyen d'injection de fluide dans ledit logement (1).

## Patentansprüche

1. Zerreißvorrichtung mit einem Rotor (2), der eine Mehrzahl von Schneiden (4) aufweist, die an ihm befestigt sind, bei der der Rotor in einem im allgemeinen zylindrischen Gehäuse (1) angeordnet ist, das mittig zur Achse des Rotors (2) vorgesehen ist, bei der das zylindrische Gehäuse an wenigstens einem Teil des Umfangs, der sich von dem Bereich einer tangentiell angeordneten Ausgangsleitung (9) aus erstreckt, in Bezug auf den Rotor eine unebene Innenfläche aufweist, die durch eine Reihe von Vorsprüngen gebildet ist, die im wesentlichen parallel zur Achse des Rotors ausgerichtet sind, bei der das Gehäuse von den Spitzen der Messer der Rotorschneiden (4) so beabstandet ist, daß in das Gehäuse eingeführtes Material weiderholt zwischen den Rotorschneiden (4) und der Fläche nach vorn und nach hinten gelenkt wird, dadurch gekennzeichnet, daß die Vorsprünge einen durch winkelige Wellen (10) bestimmten Querschnitt aufweisen und daß der von den Wellen gebildete Winkel kleiner als 90° ist und bei der Mehrzahl der Wellen in einem Bereich von 100—130° liegt.

2. Vorrichtung nach Anspruch 1, dadurch gekennzeichnet, daß keine der Oberflächen der Wellen tangentiell zu einem Kreis verläuft, dessen Mittelpunkt auf der Achse des Rotors (2) liegt.

3. Vorrichtung nach Anspruch 1 oder 2, dadurch gekennzeichnet, daß der Abstand zwischen dem von den Spitzen der Rotormesser (4) beschriebenen Bogen und der unebenen Innenfläche nicht kleiner als 6 mm ist.

4. Vorrichtung nach einem der Ansprüche 1 bis 3, dadurch gekennzeichnet, daß eine Einrichtung zur Veränderung des Abstands zwischen dem von den Spitzen der Rotormesser (4) beschriebenen Bogen und der unebenen Innenfläche vorgesehen ist.

5. Vorrichtung nach einem der Ansprüche 1 bis 4, dadurch gekennzeichnet, daß der Rotor (2) horizontal angeordnet ist, und daß eine Einlaßleitung (8) in das zylindrische Gehäuse (1) an einem Punkt führt, der oberhalb der Achse des Rotors (2) und in Bezug auf dessen Drehrichtung vor der Achse liegt.

6. Vorrichtung nach Anspruch 5, dadurch gekennzeichnet, daß sich die unebene Innenfläche im wesentlichen von dem Bereich der Einlaßleitung (8) zu dem Bereich der Auslaßleitung (9) erstreckt.

7. Vorrichtung nach einem der Ansprüche 1 bis 4, dadurch gekennzeichnet, daß eine Einlaßleitung (8) in wenigstens einer Endwand des zylindrischen Gehäuses (1) eine Öffnung aufweist.

8. Vorrichtung nach Anspruch 7, dadurch gekennzeichnet, daß die Rotorschneiden (4) in der Nähe der Öffnung mit einer Messerkante zusammenwirken, die an der Öffnung an dem Gehäuse befestigt ist, um einen Zerhackvorgang zu bewirken.

9. Vorrichtung nach einem der Ansprüche 1 bis 8, dadurch gekennzeichnet, daß eine Einrichtung zum Einführen von Flüssigkeiten in das Gehäuse (1) vorgesehen ist.

FIG.I.

FIG.2.